# FASCICULE DE BREVET EUROPEEN

(11) **EP 0 861 166 B1**
(45) Date de publication et mention de la délivrance du brevet: **22.03.2000**
(21) Numéro de dépôt: 96937397.6
(22) Date de dépôt: 06.11.1996
(51) Int. Cl.: B60P 1/02

(54) **EQUIPEMENT DE STRUCTURE POUR VEHICULE ROUTIER PROCURANT UN PLANCHER SUPPLEMENTAIRE MOBILE**
GESTELLANORDNUNG FÜR EIN STRASSENFAHRZEUG ZUR BILDUNG EINES ZUSÄTZLICHEN BEWEGLICHEN BODENS
STRUCTURAL ASSEMBLY FORMING AN ADDITIONAL MOVABLE DECK ON A ROAD VEHICLE

(30) Priorité: 13.11.1995 FR 9513574
(43) Date de publication de la demande: 02.09.1998
(73) Titulaire: LOHR INDUSTRIE, 67980 Hangenbieten (FR)
(72) Inventeur: ANDRE, Jean-Luc, F-67210 Obernai (FR)
(74) Mandataire: Metz, Paul
(86) Numéro de dépôt international: FR9601737
(87) Numéro de publication internationale: WO9718103

(56) Documents cités:
- WO-A-95/28297
- DE-U- 9 210 242
- FR-A- 2 679 194
- GB-A- 2 154 184
- US-A- 5 051 046

## Description

La présente invention se rapporte à un équipement pour véhicules sous la forme d'une unité de chargement avec plateau mobile à monter sur le plancher d'une base mobile de transport : remorque, semi-remorque, camion, wagon ou autre pour le transport de marchandises ou de fret spécialisé, notamment de charges indivisibles, en vue de lui procurer à volonté soit un deuxième plan de chargement mobile verticalement soit l'espace libre usuel de chargement.

Les véhicules de transport de marchandises ou de fret général, notamment camions, semi-remorques, remorques, sont équipés d'un plancher de chargement sur lequel sont disposés des conteneurs, boîtes, caisses ou autres contenants protégeant les produits à transporter.

Ces contenants sont placés au mieux dans l'espace intérieur disponible, rangés en colonnes ou en piles puis juxtaposés dans le volume utile de chargement, formant ainsi un ensemble compact d'une certaine cohésion en vue d'obtenir une stabilité et un bon coefficient de remplissage.

Selon le cas, les contenants sont arrimés pour éviter leur déplacement par les mouvements du châssis consécutifs à la configuration de la route et au roulage ainsi qu'aux forces d'accélération, de freinage et à la force centrifuge.

La présence connue de deux plans de chargement représentant deux niveaux de chargement permet d'augmenter la capacité de transport et de faciliter le chargement.

Dans un véhicule tel que défini dans le préambule de la revendication 1 et connu par exemple de FR-A-2 679 194, cette facilité est encore augmentée par le caractère mobile du deuxième plan de chargement qui peut s'abaisser au niveau du plancher, position dans laquelle le chargement et le déchargement peuvent être effectués comme habituellement.

Ces possibilités sont intéressantes, mais amoindries par la présence des montants supportant le plan intermédiaire de chargement mobile.

En effet, ces montants constituent une gène pour l'accès latéral et par l'arrière. Or, le caractère libre de cet accès représente un avantage fondamental dans les procédures habituelles de chargement/déchargement que ne peuvent offrir dans leurs deux configurations les ensembles connus de chargement à plan intermédiaire mobile, mais à montants fixes.

L'invention procure simultanément les deux séries d'avantages, à savoir ceux exposés ci-dessus, correspondant à un plan intermédiaire mobile de chargement et les avantages propres d'une base mobile de transport équipée d'un seul plan de chargement, mais à accès total aussi bien latéral que par l'arrière.

A cet effet, l'invention propose un ensemble à monter pour véhicule routier tel que défini dans la revendication 1.

On peut ainsi fractionner le chargement qui repose pour partie sur le plancher d'origine et pour partie sur le plan intermédiaire mobile. Les colonnes de caisses de hauteur limitée gardent leur stabilité et la caisse inférieure n'est plus écrasée par le poids des trop nombreuses autres caisses qu'elle doit supporter, caisse inférieure dont la solidité n'a pas été prévue pour cet usage.

La faible épaisseur du plancher supplémentaire mobile permet de garder sensiblement la même capacité de chargement en configuration classique.

Les facilités de chargement sont conservées par le caractère escamotable des poteaux qui libèrent dans leur position rabattue les accès latéraux et arrière.

Par ailleurs, grâce à cette invention, le transporteur peut, par une opération simple et rapide, passer d'une configuration à simple plan porteur à une configuration biplan porteur et inversement.

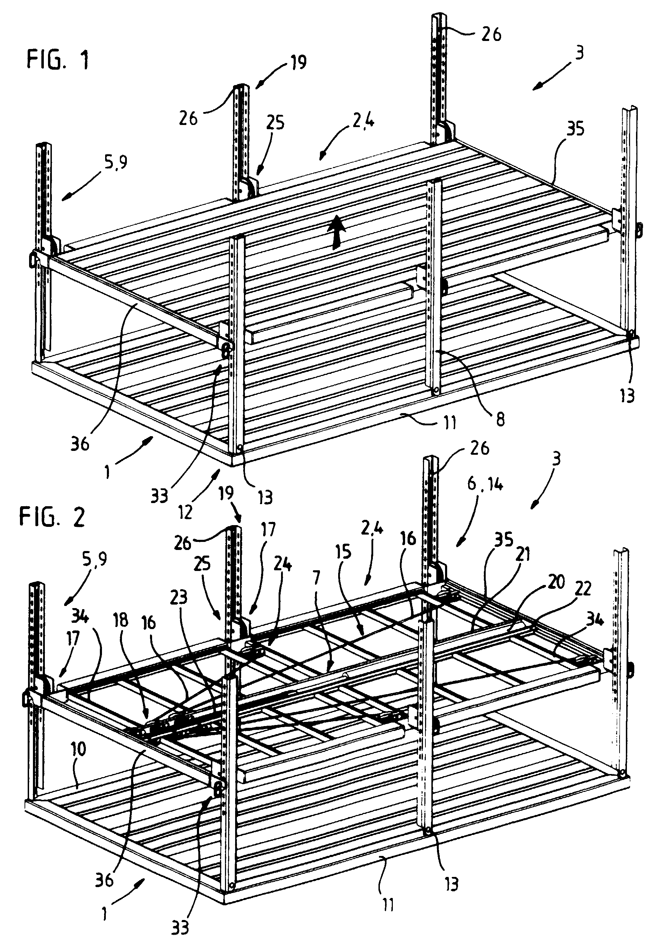

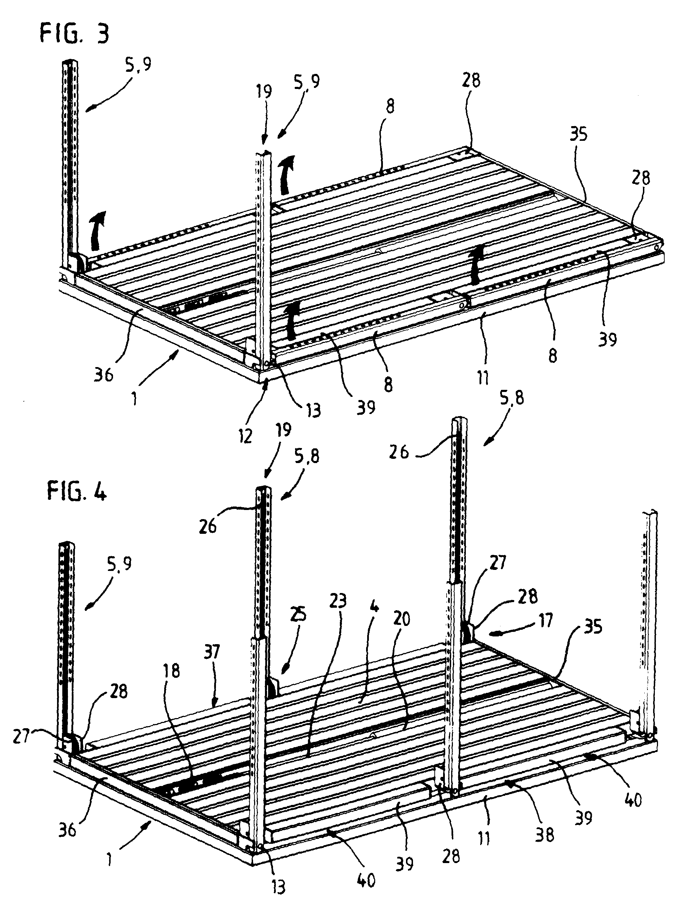

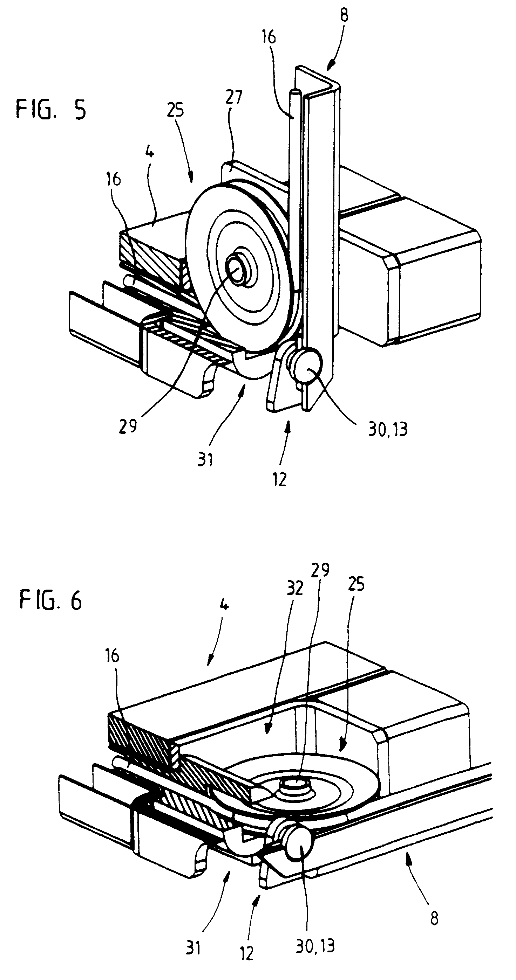

D'autres caractéristiques et avantages de l'invention apparaîtront dans la description qui suit, donnée à titre d'exemple et accompagnée des dessins qui représentent :
. la figure 1 : une vue générale en perspective de l'équipement de chargement à l'état monté avec plancher mobile à mi-course ;
. la figure 2 : une vue générale en perspective de l'équipement de chargement à l'état monté, plancher mobile représenté transparent ;
. la figure 3 : une vue générale en perspective de l'équipement de chargement à l'état escamoté, plancher mobile abaissé en position inférieure ;
. la figure 4 : une vue générale en perspective de l'équipement de chargement à l'état escamoté, plancher mobile abaissé en position inférieure et poteaux relevés ;
. les figures 5 et 6 : respectivement une vue de la poulie mobile de renvoi en position respectivement relevée et couchée.

La structure d'équipement selon l'invention est destinée à être montée de façon rapide et facile sur une base mobile de transport comportant un châssis (non représenté) et un plancher d'origine 1 pour pouvoir disposer à volonté soit d'un deuxième plan de chargement 2 à hauteur variable soit, avec les mêmes facilités d'accès, de l'espace libre usuel de chargement après effacement de la structure.

Ainsi, comme déjà indiqué, le transporteur peut, par une opération de transformation simple et rapide, passer d'une configuration à simple plan porteur à une configuration biplan porteur et inversement.

De façon générale, la structure d'équipement selon l'invention présente une structure porteuse autonome 3 formée d'un plancher supplémentaire 4 mobile verticalement, de poteaux de soutien 5 le long desquels se déplace le plancher supplémentaire, ainsi que des moyens de soutien 6 du plancher supplémentaire et un organe moteur 7 actionnant le plancher supplémentaire en mouvements d'élévation-abaissement.

Il existe deux types de poteaux de soutien 5, d'une part les poteaux longitudinaux 8 escamotables et d'autre part les poteaux avant 9, préférentiellement fixes ou rendus fixes, par exemple fixés à demeure sur la structure existante de carrosserie en vue d'assurer la stabilité de l'ensemble par la reprise des efforts latéraux et longitudinaux provenant du freinage ou des accélérations.

L'épaisseur du plancher supplémentaire 4 est la plus faible possible pour garder à la base mobile de transport pratiquement toute sa capacité de chargement en configuration dite escamotée, c'est-à-dire, plancher supplémentaire en position inférieure basse et poteaux effacés dans l'épaisseur du plancher supplémentaire.

Afin de réaliser cette fonction générale, les poteaux longitudinaux 8 sont montés basculants entre une position érigée verticale dans laquelle ils sont opérants dans leur fonction de soutien du plancher supplémentaire et une position effacée dans laquelle, le plancher supplémentaire 4 reposant sur le plancher d'origine 1, ces poteaux se trouvent rabattus le long des bords longitudinaux 10, 11 de ce plancher d'origine.

Plus particulièrement, chaque poteau longitudinal 8 est monté pivotant par son extrémité inférieure 12 sur un axe transversal 13 fixé par exemple sur les chants longitudinaux ou bords 10, 11 du plancher fixe d'origine 1 ou sur ses structures adjacentes.

Le plancher supplémentaire 4 est soutenu par un système pendulaire 14 de suspension et de manoeuvre formé de câbles et de poulies ou analogues commandés en mouvements verticaux par l'organe moteur 7 prévu dans l'épaisseur du plancher mobile.

A chaque poteau correspond un ensemble élémentaire de levage 15 comprenant un câble 16, un ensemble de renvoi 17, et une poulie motrice 18 actionnée par l'organe moteur 7.

Selon une variante, le câble 16 est de longueur constante. Il est immobilisé à chacune de ses extrémités sur un point d'une part à l'extrémité supérieure 19 de chaque poteau correspondant 8 ou 9 et d'autre part dans le plancher supplémentaire 4, par exemple sur l'organe moteur 7.

Le plancher supplémentaire 4 est un plateau mobile verticalement porté par les poteaux 8 et 9 de soutien.

Plus particulièrement, l'organe moteur peut consister en un vérin 20 disposé longitudinalement dans le plancher supplémentaire, par exemple en position médiane. Il actionne les séries de poulies en prise sur chaque câble 16 de suspension. Il existe autant de câbles que de poteaux de soutien 8 et 9.

Chaque câble 16 part d'un point situé par exemple le long des rails 21, 22 bordant le fût du vérin 20 ou de préférence sur sa tige 23, est renvoyé par la poulie motrice 18, montée fixe sur le plancher mobile, puis renvoyé dans le poteau par l'ensemble de renvoi 17 formé d'un jeu de deux poulies croisées de renvoi 24 et 25 jusqu'au point fixe 26 à l'extrémité supérieure 19 de chaque poteau 8, 9 sur laquelle est immobilisée l'extrémité libre du câble. Ce point fixe 26 est placé à l'intérieur de chaque poteau.

Les poteaux constituent des guides pour la poulie mobile de renvoi et à cet effet affectent un profil adapté de section en "U" ou en "C".

Le jeu des deux poulies croisées de renvoi est constitué d'une première poulie de renvoi 24 incorporée dans le plateau mobile au voisinage de la base inférieure du poteau et d'une poulie mobile verticale et rabattable 25 montée entre deux joues 27 et 28 supportant son axe de rotation 29. Lors des mouvements du plancher mobile, cette poulie mobile de renvoi 25 se déplace le long du poteau correspondant qu'elle utilise comme guide.

Comme il apparaît sur les figures de détail 5 et 6, le support de la poulie 25 est monté pivotant sur un axe horizontal transversal 30 sous la forme d'une pièce 31 profilée en "C" contenue dans l'épaisseur du plateau et coaxiale à l'axe de rabattement 13 du poteau adjacent. Cette disposition permet à la poulie mobile de renvoi d'affecter une position couchée dans laquelle elle s'efface entièrement dans l'épaisseur du plancher mobile dans un logement 32.

Les poteaux 8 ou 9 comportent des perforations coopérant, par exemple, avec des éléments de blocage, par exemple des broches 33 en vue de maintenir ou d'immobiliser par verrouillage le plateau à une hauteur donnée.

Le plancher mobile est constitué en cadre par des traverses courantes 34, des traverses d'extrémité 35 et 36 et un longeron central formé des deux rails 21 et 22. Des bordures longitudinales discontinues 37 et 38 formées de tronçons tels que 39 ferment les extrémités des traverses et se trouvent disposées en retrait par rapport à la limite des bords longitudinaux 10 et 11 du plancher d'origine 1.

Ce retrait permet de laisser une place suffisante entre les limites extérieures du plancher d'origine 1 et celles du plancher mobile 4 et constitue à chaque fois un logement 40 pour le poteau voisin qu'il vient occuper à l'état rabattu.

Le caractère mince du plancher mobile et la possibilité d'un état escamoté rabattu et couché des poteaux et structures saillantes procurent dans cet état une surface de chargement plane et lisse identique à celle du plancher d'origine à faible distance de celui-ci car la minceur du plancher mobile ne représente qu'une faible surépaisseur.

Les poteaux rabattables 8 sont articulés à pivotement sur le plancher par leurs extrémités inférieures montées sur un support approprié. Ils peuvent optionnellement être verrouillés aux éléments fixes de structure du véhicule, longerons supérieurs ou autres, par des fixations à verrouillage/déverrouillage rapide.

On peut également garantir la position verticale de certains poteaux à l'aide d'appuis latéraux par contre fiche(s) ou autre(s) moyens.

Les opérations de montage de l'équipement selon l'invention sont simples et rapides.

Le véhicule à équiper est débarrassé momentanément de ses couvertures latérales amovibles : bâches, panneaux,.... Les poteaux avant 9 sont fixés sur la structure de carrosserie existante alors que les poteaux latéraux 8 sont montés pivotants autour d'axes transversaux aux chants de bordure longitudinale du plancher d'origine ou de supports appropriés.

Le plancher supplémentaire mobile 4 est introduit entre les poteaux et posé sur le plancher d'origine. Les extrémités libres des câbles 16 des ensembles de suspension et de manoeuvre 14 sont fixées en partie supérieure des poteaux.

L'organe moteur 7 est raccordé à sa source d'énergie et l'ensemble est soumis aux essais avant d'être déclaré opérationnel.

## Revendications

1. Ensemble à monter pour véhicule routier à plancher inférieur fixe (1), ensemble se composant d'une série de poteaux verticaux (5) par rapport au plancher inférieur fixe (1) et d'un plancher supplémentaire de chargement (4) mobile et guidé dans ses mouvements le long des poteaux (5) sous l'effet d'un organe moteur prévu à l'intérieur du plancher supplémentaire mobile de chargement (4) caractérisé en ce que au moins certains des poteaux verticaux (5) sont montés articulés par leur base sur un élément de carrosserie du véhicule pour venir s'effacer en position inopérante en dehors de la surface de chargement du plancher supplémentaire mobile (4) lorsque celui-ci est en position basse d'appui sur le plancher inférieur fixe (1) du véhicule, cette association de moyens étant prévue de façon à constituer à volonté, soit un deuxième plan de chargement à hauteur variable entre une position haute et une position basse et immobilisable dans une position donnée soit, après abaissement du plancher supplémentaire mobile (4), et contact d'appui sur le plancher inférieur fixe et après escamotage des poteaux effaçables, un volume maximal totalement libre pour le chargement.

2. Ensemble selon la revendication 1 caractérisé en ce que les poteaux verticaux escamotables sont ceux (8) situés sur les bords longitudinaux et à l'arrière du plancher supplémentaire mobile.

3. Ensemble selon la revendication 1 ou 2 caractérisé en ce que l'effacement des poteaux verticaux escamotables (8) en position inopérante s'effectue par rabattement dans un volume extérieur à la surface de chargement du plancher supplémentaire mobile (4).

4. Ensemble selon l'une quelconque des revendications précédentes caractérisé en ce que le rabattement des poteaux (8) escamotables s'effectue par pivotement vers le plancher inférieur fixe jusque dans une position inopérante escamotée dans laquelle ils se trouvent effacés parallèles à la surface supérieure du plancher supplémentaire en dehors et en dessous de celle-ci.

5. Ensemble selon la revendication 1 caractérisé en ce que le plancher supplémentaire mobile (4) présente sur ses chants latéraux des retraits servant de logement (40) aux poteaux escamotables (8) dans leur position rabattue.

6. Ensemble selon l'une quelconque des revendications précédentes caractérisé en ce que la largeur des poteaux verticaux escamotables est inférieure ou égale à l'épaisseur du plancher supplémentaire (4).

7. Ensemble selon l'une quelconque des revendications précédentes caractérisé en ce que le plancher supplémentaire (4) soutenu au moyen des poteaux verticaux l'est par l'intermédiaire d'une suspension (14) formée d'une pluralité de câbles (16) tendus entre l'extrémité supérieure (19) de tous les poteaux verticaux (5) et le plancher supplémentaire (4) en passant par l'organe moteur (7).

8. Ensemble selon la revendication 1 caractérisé en ce que l'organe moteur (7) est logé dans l'épaisseur du plancher supplémentaire mobile (4).

9. Ensemble selon la revendication 7 caractérisé en ce que l'organe moteur (7) est un vérin (20) actionnant un ensemble de poulies motrices (18).

10. Ensemble selon la revendication 7 caractérisé en ce que chaque câble (16) traverse le plancher supplémentaire (4) à l'intérieur de celui-ci puis est dévié par un ensemble (17) de poulies de renvoi vers l'extrémité supérieure (19) de chaque poteau (5).

11. Ensemble selon la revendication précédente caractérisé en ce que l'ensemble de renvoi est formé d'une poulie fixe (24) et d'une poulie mobile (25) rabattable avec le poteau adjacent venant occuper un logement (32) prévu à la base du poteau.

12. Ensemble selon la revendication précédente caractérisé en ce que pour chaque poteau longitudinal (8), la poulie de renvoi associée au poteau est rabattable avec lui.

13. Ensemble selon la revendication 1 caractérisé en ce que l'épaisseur du plancher supplémentaire (4) mobile est faible.

## Patentansprüche

1. Montierbarer Aufbau für ein Straßenfahrzeug mit einem unteren festen Boden (1), bestehend aus einer Reihe von bezüglich des unteren festen Bodens (1) vertikalen Stützen (5) und einem zusätzlichen Ladeboden (4), der entlang der Stützen (5) unter der Wirkung eines innerhalb des zusätzlichen Ladebodens (4) vorgesehenen Antriebs beweglich geführt ist, dadurch gekennzeichnet, daß wenigstens einige der vertikalen Stützen (5) mit ihrem Fuß schwenkbar an einem Karosserieteil des Fahrzeugs gelagert sind, um sie in eine unwirksame Position außerhalb der Ladeebene des zusätzlichen beweglichen Ladebodens (4) zu verbringen, wenn dieser sich in einer unteren, auf dem unteren festen Boden (1) des Fahrzeugs aufliegenden Position befindet, wobei die Mittel derart vorgesehen sind, daß wahlweise entweder eine zweite Ladeebene in variabler Höhe zwischen einer oberen Position und einer unteren Position in einer gewünschten Position feststellbar ist, oder nach Absenken des zusätzlichen beweglichen Ladebodens (4) und Aufliegen auf dem unteren festen Boden und nach Abklappen der klappbaren Stützen in die unwirksame Position ein maximaler Freiraum für das Laden gebildet wird.

2. Aufbau nach Anspruch 1, dadurch gekennzeichnet, daß die vertikalen klappbaren Stützen diejenigen (8) sind, die an den Längsseiten und heckseitig des zusätzlichen beweglichen Ladebodens angeordnet sind.

3. Aufbau nach Anspruch 1 oder 2, dadurch gekennzeichnet, daß das Verbringen der vertikalen klappbaren Stützen (8) in eine unwirksame Position durch Abklappen in einen äußeren Raum an der Ladefläche des zusätzlichen beweglichen Ladebodens (4) erfolgt.

4. Aufbau nach einem der vorangehenden Ansprüche, dadurch gekennzeichnet, daß das Abklappen der klappbaren Stützen (8) durch Schwenken in Richtung auf den unteren festen Boden in eine unwirksame eingeklappte Position erfolgt, in der sie sich parallel zur Oberfläche des zusätzlichen Ladebodens außerhalb und unterhalb desselben befinden.

5. Aufbau nach Anspruch 1, dadurch gekennzeichnet, daß der zusätzliche bewegliche Ladeboden (4) an seinen Längsseiten Ausnehmungen aufweist, die als Aufnahme (40) für die klappbaren Stützen (8) in ihrer abgeklappten Position dienen.

6. Aufbau nach einem der vorangehenden Ansprüche, dadurch gekennzeichnet, daß die Breite der vertikalen klappbaren Stützen kleiner oder gleich der Höhe des zusätzlichen Ladebodens (4) ist.

7. Aufbau nach einem der vorangehenden Ansprüche, dadurch gekennzeichnet, daß der zusätzliche Ladeboden (4) an den vertikalen Stützen über eine Aufhängung (14) getragen ist, die von mehreren zwischen dem oberen Ende (19) einer jeden vertikalen Stütze (5) und dem zusätzlichen Ladeboden (4) gespannten und über den Antrieb (7) geführten Seilen (16) gebildet ist.

8. Aufbau nach Anspruch 7, dadurch gekennzeichnet, daß der Antrieb (7) innerhalb der Höhe des zusätzlichen beweglichen Ladebodens (4) untergebracht ist.

9. Aufbau nach Anspruch 7, dadurch gekennzeichnet, daß das Antriebsmittel (7) ein Stellantrieb (20) ist, der auf einen Satz Treibrollen (18) wirkt.

10. Aufbau nach Anspruch 7, dadurch gekennzeichnet, daß jedes Seil (16) den zusätzlichen Ladeboden (4) innerhalb desselben durchquert und dann von einem Satz (17) Umlenkrollen in Richtung des oberen Endes (19) einer jeden Stütze (19) umgelenkt ist.

11. Aufbau nach dem vorangehenden Anspruch, dadurch gekennzeichnet, daß die Einheit zum Umlenken von einer ortsfesten Rolle (24) und einer beweglichen Rolle (25) gebildet ist, die zusammen mit der zugehörigen Stütze abklappbar und in eine an der Basis der Stütze vorgesehene Aufnahme (32) einbringbar ist.

12. Aufbau nach dem vorangehenden Anspruch, dadurch gekennzeichnet, daß die Umlenkrolle einer jeden längsseitigen Stütze (8) mit dieser abklappbar ist.

13. Aufbau nach Anspruch 1, dadurch gekennzeichnet, daß die Höhe des zusätzlichen beweglichen Ladebodens (4) gering ist.

## Claims

1. Mounting assembly for a road vehicle having a fixed lower deck (1), the assembly being composed of a series of posts (5) which are upright relative to the fixed lower deck (1), and of an additional loading deck (4) which is movable and guided in its movements along the posts (5) under the action of a drive device provided inside the movable additional loading deck (4), characterised in that at least some of the upright posts (5) are mounted in such a manner that they are articulated by their bases to a bodywork element of the vehicle in order to collapse into an inoperative position outside the loading surface of the movable additional deck (4) when the latter is in the bottom position in which it is supported on the fixed lower deck (1) of the vehicle, that association of means being provided in order to constitute, as desired, either a second loading level which is variable in height between a top position and a bottom position and which is immobilisable in a given position or, after lowering the movable additional deck (4), and support contact on the fixed lower deck and after retraction of the posts which can be collapsed, a maximum totally free volume for loading.

2. Assembly according to claim 1, characterised in that the retractable upright posts are those (8) arranged on the longitudinal edges and at the rear of the movable additional deck.

3. Assembly according to claim 1 or 2, characterised in that the moving of the retractable upright posts (8) out of the way into an inoperative position is effected by folding them down into a volume outside the loading surface of the movable additional deck (4).

4. Assembly according to any one of the preceding claims, characterised in that the folding-down of the retractable posts (8) is effected by pivoting them towards the fixed lower deck until a retracted inoperative position is reached in which they have been moved out of the way parallel to the upper surface of the additional deck outside and below that surface.

5. Assembly according to claim 1, characterised in that the movable additional deck (4) has, on its lateral edges, recesses acting as housings (40) for the retractable posts (8) in their folded-down position.

6. Assembly according to any one of the preceding claims, characterised in that the width of the retractable upright posts is smaller than or equal to the thickness of the additional deck (4).

7. Assembly according to any one of the preceding claims, characterised in that the support of the additional deck (4) by means of the upright posts is effected by way of a suspension system (14) formed by a plurality of cables (16) tightened between the upper end (19) of all the upright posts (5) and the additional deck (4), while passing by way of the drive device (7).

8. Assembly according to claim 1, characterised in that the drive device (7) is accommodated within the thickness of the movable additional deck (4).

9. Assembly according to claim 7, characterised in that the drive device (7) is a jack (20) operating a set of drive pulleys (18).

10. Assembly according to claim 7, characterised in that each cable (16) passes through the additional deck (4) on the inside thereof and is then deflected by a set (17) of return pulleys towards the upper end (19) of each post (5).

11. Assembly according to the preceding claim, characterised in that the return set is formed by a fixed pulley (24) and by a movable pulley (25) which can be folded down with the adjacent post to occupy a housing (32) provided at the base of the post.

12. Assembly according to the preceding claim, characterised in that, for each longitudinal post (8), the return pulley associated with the post can be folded down therewith.

13. Assembly according to claim 1, characterised in that the thickness of the movable additional deck (4) is small.
